# EUROPÄISCHE PATENTANMELDUNG

(11) **EP 4 803 928 A1**
(43) Veröffentlichungstag der Anmeldung: **09.09.2026**
(21) Anmeldenummer: 26152126.4
(22) Anmeldetag: 15.01.2026
(51) Int. Cl.: G01S 7/497, G01S 17/42, G01S 17/931

(54) **ASSISTENZSYSTEM FÜR EIN FAHRZEUG MIT LIDAR ZUR UNTERSCHEIDUNG ZWISCHEN OBJEKTEN UND STÖRUNGEN**

(30) Priorität: 05.03.2025 DE 102025108297
(71) Anmelder: Linde Material Handling GmbH, 63743 Aschaffenburg (DE)
(72) Erfinder: Pfeffermann, Matthias, 63739 Aschaffenburg (DE)
(74) Vertreter: Patentship Patentanwaltgesellschaft

(57) **Zusammenfassung**

Die Erfindung betrifft ein Assistenzsystem (200) für ein Fahrzeug (110), das mit einem Lidar-Sensor (120) zum Erkennen einer Umgebung (100) des Fahrzeugs (110) ausgestattet ist. Das Assistenzsystem (200) umfasst einen Empfänger (210) zum Empfang von Sensordaten (220) des Lidar-Sensors (120). Die Sensordaten (220) umfassen eine Mehrzahl von Lasermesspunkten in Azimut-Koordinaten (221) und eine Mehrzahl von Lasermesspunkten in Elevations-Koordinaten (222). Das Assistenzsystem (200) umfasst eine Steuerung (230), die ausgebildet ist, anhand der Lasermesspunkte ein Objekt (130) zu detektieren (231) und von einer punktuellen Störung (140), insbesondere Umwelteinflüssen und unkritischen Hindernissen am Straßenrand, anhand einer Clusterung zu unterscheiden, welche auf benachbarten Lasermesspunkten (P_{a-1,e}, P_{a,e}) der Mehrzahl von Lasermesspunkten in Azimut-Koordinaten (221) und/oder benachbarten Lasermesspunkten (P_{a,e+1}, P_{a,e}, P_{a,e-1}) der Mehrzahl von Lasermesspunkten in Elevations-Koordinaten (222) basiert.

## Beschreibung

Die Erfindung betrifft das Gebiet der Assistenzsysteme für Fahrzeuge und Sensoren solcher Assistenzsysteme. Die Erfindung betrifft ein Assistenzsystem für ein Fahrzeug mit Lidar-Sensor und Steuerung zur Unterscheidung zwischen Objekten und punktuellen Störungen, insbesondere Umwelteinflüssen wie Regen oder Schnee und unkritischen Hindernissen am Straßenrand wie Unkraut oder Gras. Insbesondere betrifft die Erfindung das rechenzeiteffiziente Ausblenden von Regen, Schnee und kleinen Objekten aus der Point Cloud eines Lidar-Sensors.

Fahrerassistenzsysteme nutzen Informationen über das Fahrzeug und dessen Umfeld, um den Fahrer bei der Bedienung des Fahrzeugs zu unterstützen. Diese Informationen erhalten die Systeme von Sensoren, Ultraschall, Radar, Lidar und Kameras. Die gesammelten Informationen müssen dann vom System ausgewertet werden. Daraufhin greift das System entweder selbst ein - beispielsweise in den Antrieb und reguliert Gas oder Bremse oder in die Steuerung - oder das System warnt den Fahrer über Lautsprecher, Displays oder auch Lenkrad, damit dieser selbst eingreifen kann.

Lidar-Sensoren werden vor allem in Assistenzsystemen von Fahrzeugen eingesetzt, um die Umgebung zu erkennen.

Um eine einwandfreie Funktion eines auf einem Lidar-Sensor basierenden Assistenzsystems zu gewährleisten, dürfen Umwelteinflüsse wie Regen oder Schnee, aber auch unkritische Hindernisse wie Unkraut oder Gras am Straßenrand nicht als für die Applikation relevantes Objekt identifiziert werden. Aufgrund der eher zufälligen Verteilung dieser punktuellen Störungen im Raum lassen sich diese Störungen bis zu einer gewissen Stärke gewöhnlich mittels Filterverfahren herausfiltern.

Besonders für Embedded Systeme mit starken Limitierungen hinsichtlich Rechenleistung und Arbeitsspeicher (RAM) ist das Erstellen von aufwendigen und umfangreichen Filterverfahren jedoch nicht möglich.

Der vorliegenden Erfindung liegt die Aufgabe zugrunde, eine rechenzeiteffiziente Lösung zum Herausfiltern von unerwünschten Umwelteinflüssen zu schaffen, die mit einer geringen Auslastung des Arbeitsspeichers insbesondere für Embedded Systeme geeignet ist.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die erfinderische Lösung basiert auf der Idee, diese Störungen mittels Clusterbildung herauszufiltern, welche sich auf benachbarte Azimut-Schritte und Elevations-Schritte beschränkt, um damit Rechenleistung und Arbeitsspeicher einzusparen und die Lösung für Embedded Systeme anwendbar zu machen.

Je nach vorhandenem Arbeitsspeicher kann die Steuerung (ECU) den aktuell abzuarbeitenden Azimut-Schritt aₙ (mit E Elevationen) und bis zu b benachbarte Azimut-Schritte, z.B. aₙ₋₁ bis a_{n-b} vorhalten und zur Clusterbildung nutzen.

Die hier vorgestellte Lösung stellt somit einen rechenzeiteffizienten Mechanismus zum Clustern dar, der gleichzeitig unerwünschte Umwelteinflüsse eliminiert, und mit einer geringen Auslastung des Arbeitsspeichers besonders für Embedded Systeme geeignet ist.

Die hier vorgestellte Lösung kann in allen Applikationen, die einen solchen Lidar-Sensor verwenden, eingesetzt werden. Auch ist sie für alle derzeit gängigen Bauformen eines Lidar-Sensors einsetzbar.

Gemäß einem ersten Aspekt der Erfindung wird die oben beschriebene Aufgabe gelöst durch ein Assistenzsystem für ein Fahrzeug, das mit einem Lidar-Sensor zum Erkennen einer Umgebung des Fahrzeugs ausgestattet ist, wobei das Assistenzsystem folgendes umfasst: einen Empfänger zum Empfang von Sensordaten des Lidar-Sensors, wobei die Sensordaten eine Mehrzahl von Lasermesspunkten in Azimut-Koordinaten und eine Mehrzahl von Lasermesspunkten in Elevations-Koordinaten umfassen; und eine Steuerung, die ausgebildet ist, anhand der Lasermesspunkte in Azimut-Koordinaten und in Elevations-Koordinaten ein Objekt zu detektieren und von einer punktuellen Störung, insbesondere Umwelteinflüssen wie Regen oder Schnee und unkritischen Hindernissen am Straßenrand wie Unkraut oder Gras, anhand einer Clusterung zu unterscheiden, welche auf benachbarten Lasermesspunkten der Mehrzahl von Lasermesspunkten in Azimut-Koordinaten und/oder benachbarten Lasermesspunkten der Mehrzahl von Lasermesspunkten in Elevations-Koordinaten basiert.

Durch einen Vergleich zweier benachbarter Lasermessungen, die man auf demselben Hindernis vermutet, kann das hier vorgestellte Assistenzsystem zufällige Hindernisse ausschließen, die nur von einer einzelnen Lasermessung erfasst werden. Dies macht die Auswertung der Punktewolke robust gegen zufällige Detektionen wie z.B. Regen, Schnee, Staub, aber auch stark zerklüftete Hindernisse wie Unkraut/Gras am Straßenrand. Da hier nur unmittelbar benachbarte Punkte miteinander verglichen werden, ist eine effiziente Implementierung auf einem Embedded System möglich.

Die oben genannten Begriffe Regen und Schnee sowie Hindernisse am Straßenrand wie Unkraut oder Gras sind hier nur als Beispiele einer punktuellen Störung zu verstehen. Natürlich kann es sich bei einer punktuellen Störung auch um andere Einflüsse handeln, die beispielsweise daran erkennbar sind, dass sie üblicherweise nur anhand einer Lasermessung erkennbar sind, in einer benachbarten Lasermessung aber nicht mehr auftreten.

Gemäß einer beispielhaften Ausführungsform des Assistenzsystems ist die Steuerung ausgebildet, die Lasermesspunkte in zylindrische Koordinaten umzuwandeln, welche eine Distanzkoordinate und eine Höhenkoordinate aufweisen.

Anhand der zylindrischen Koordinaten lassen sich die Lasermessungen leichter und ressourceneffizienter verarbeiten.

Gemäß einer beispielhaften Ausführungsform des Assistenzsystems ist die Steuerung ausgebildet, für einen Lasermesspunkt einen benachbarten Lasermesspunkt mit derselben Elevations-Koordinate und einer benachbarten Azimut-Koordinate zu detektieren, der innerhalb eines Toleranzbereichs zu dem Lasermesspunkt liegt; und die Steuerung ist ausgebildet, bei Detektion des benachbarten Lasermesspunkts ein Objekt zu detektieren und von einer punktuellen Störung zu unterscheiden.

Durch einen Vergleich zweier benachbarter Lasermessungen mit derselben Elevations-Koordinate kann das Assistenzsystem anhand einer einfachen Clusterung ohne großen Rechenaufwand zufällige Hindernisse von festen oder beweglichen Objekten unterscheiden, so dass der Fahrer (oder eine autonome Steuerung) das Fahrzeug mit Hilfe des Assistenzsystems zuverlässig und sicher steuern kann.

Gemäß einer beispielhaften Ausführungsform des Assistenzsystems umfasst der Toleranzbereich einen ersten Toleranzbereich bezüglich Distanzkoordinaten des Lasermesspunkts zu dem benachbarten Lasermesspunkt und einen zweiten Toleranzbereich bezüglich Höhenkoordinaten des Lasermesspunkts zu dem benachbarten Lasermesspunkt.

Anhand dieser zylindrischen Koordinaten und Toleranzbereiche kann das Assistenzsystem eine zuverlässige Clusterung von Lasermesspunkten vornehmen, ohne dass dazu großer Rechenaufwand nötig wäre. Das Assistenzsystem eignet sich damit zur Implementierung in Embedded Systemen.

Gemäß einer beispielhaften Ausführungsform des Assistenzsystems ist die Steuerung ausgebildet, bei einer Abweichung der Distanzkoordinate des Lasermesspunkts von der Distanzkoordinate des benachbarten Lasermesspunkts, welche kleiner ist als der erste Toleranzbereich und bei einer Abweichung der Höhenkoordinate des Lasermesspunkts von der Höhenkoordinate des benachbarten Lasermesspunkts, welche kleiner ist als der zweite Toleranzbereich, ein Objekt zu detektieren.

Auf diese Weise lässt sich zuverlässig erkennen, ob eine punktuelle Störung oder ein Hindernis mit einer zumindest teilweise homogenen Oberfläche vorliegt, welche durch den Lidar-Sensor erfasst wird.

Gemäß einer beispielhaften Ausführungsform des Assistenzsystems sind der erste Toleranzbereich und/oder der zweite Toleranzbereich von einer Streuung und einem Konfidenzintervall der Lasermesspunkte, insbesondere einer multiplikativen Verknüpfung der Streuung mit dem Konfidenzintervall, abhängig.

Auf diese Weise lassen sich die Toleranzbereiche einfach bestimmen und beispielsweise anhand von bereits vorhandenen Messwerten vorgeben. Eine solche Abhängigkeit spart Rechenzeit und Ressourcen des Systems.

Gemäß einer beispielhaften Ausführungsform des Assistenzsystems ist die Steuerung ausgebildet, einen Gradienten des Lasermesspunkts zu dem benachbarten Lasermesspunkt und einen Gradienten des benachbarten Lasermesspunkts zu einem diesem benachbarten Lasermesspunkt zu bestimmen; und die Steuerung ist ausgebildet, bei gleichem Vorzeichen der zwei Gradienten ein Objekt zu detektieren und von einer punktuellen Störung zu unterscheiden.

Mithilfe des Gradienten lässt sich eine genauere Bestimmung durchführen, ob es sich um eine punktuelle Störung oder um ein Objekt im Bereich des Fahrzeugs handelt.

Gemäß einer beispielhaften Ausführungsform des Assistenzsystems ist die Steuerung ausgebildet, für einen Lasermesspunkt mindestens einen benachbarten Lasermesspunkt mit derselben Azimut-Koordinate und einer benachbarten Elevations-Koordinate zu detektieren, der innerhalb eines Toleranzbereichs zu dem Lasermesspunkt liegt; und die Steuerung ist ausgebildet, bei Detektion des mindestens einen benachbarten Lasermesspunkts ein Objekt zu detektieren und von einer punktuellen Störung zu unterscheiden.

Durch einen Vergleich zweier benachbarter Lasermessungen mit derselben Azimut-Koordinate kann das Assistenzsystem anhand einer einfachen Clusterung ohne großen Rechenaufwand zufällige Hindernisse von festen oder beweglichen Objekten unterscheiden, so dass der Fahrer (oder eine autonome Steuerung) das Fahrzeug mit Hilfe des Assistenzsystems zuverlässig und sicher steuern kann.

Gemäß einer beispielhaften Ausführungsform des Assistenzsystems umfasst der Toleranzbereich einen ersten Toleranzbereich bezüglich Distanzkoordinaten des Lasermesspunkts zu dem mindestens einen benachbarten Lasermesspunkt und einen zweiten Toleranzbereich bezüglich Höhenkoordinaten des Lasermesspunkts zu dem mindestens einen benachbarten Lasermesspunkt.

Anhand dieser zylindrischen Koordinaten und Toleranzbereiche kann das Assistenzsystem eine zuverlässige Clusterung von Lasermesspunkten vornehmen, ohne dass dazu großer Rechenaufwand nötig wäre. Das Assistenzsystem eignet sich damit zur Implementierung in Embedded Systemen.

Gemäß einer beispielhaften Ausführungsform des Assistenzsystems ist die Steuerung ausgebildet, bei einer Abweichung der Distanzkoordinate des Lasermesspunkts von der Distanzkoordinate des mindestens einen benachbarten Lasermesspunkts, welche kleiner ist als der erste Toleranzbereich und bei einer Abweichung der Höhenkoordinate des Lasermesspunkts von der Höhenkoordinate des mindestens einen benachbarten Lasermesspunkts, welche kleiner ist als der zweite Toleranzbereich, ein Objekt zu detektieren.

Auf diese Weise lässt sich zuverlässig erkennen, ob eine punktuelle Störung oder ein Hindernis mit einer zumindest teilweise homogenen Oberfläche vorliegt, welche durch den Lidar-Sensor erfasst wird.

Gemäß einer beispielhaften Ausführungsform des Assistenzsystems sind der erste Toleranzbereich und/oder der zweite Toleranzbereich von einer Streuung und einem Konfidenzintervall der Lasermesspunkte, insbesondere einer multiplikativen Verknüpfung der Streuung mit dem Konfidenzintervall, abhängig.

Auf diese Weise lassen sich die Toleranzbereiche einfach bestimmen und beispielsweise anhand von bereits vorhandenen Messwerten vorgeben. Eine solche Abhängigkeit spart Rechenzeit und Ressourcen des Systems.

Gemäß einer beispielhaften Ausführungsform des Assistenzsystems ist die Steuerung ausgebildet, einen Gradienten des Lasermesspunkts zu dem mindestens einen benachbarten Lasermesspunkt und einen Gradienten des mindestens einen benachbarten Lasermesspunkts zu einem diesem benachbarten Lasermesspunkt zu bestimmen; und die Steuerung ist ausgebildet, bei gleichem Vorzeichen der zwei Gradienten ein Objekt zu detektieren und von einer punktuellen Störung zu unterscheiden.

Mithilfe des Gradienten und dessen Richtung, welche die Steuerung einfach über eine Vorzeichenbestimmung ermitteln kann, lässt sich eine genauere Bestimmung durchführen, ob es sich um eine punktuelle Störung oder um ein Objekt im Bereich des Fahrzeugs handelt.

Gemäß einem zweiten Aspekt der Erfindung wird die oben beschriebene Aufgabe gelöst durch ein Fahrzeug, umfassend einen Lidar-Sensor, der ausgebildet ist, eine Umgebung des Fahrzeugs zu erfassen und ein Assistenzsystem gemäß dem oben beschriebenen ersten Aspekt, das ausgebildet ist, ein Objekt zu detektieren und von einer punktuellen Störung, insbesondere Umwelteinflüssen wie Regen oder Schnee und unkritischen Hindernissen am Straßenrand wie Unkraut oder Gras, zu unterscheiden.

Mit einem solchen Fahrzeug mit Lidar-Sensor und Assistenzsystem ist eine effiziente Überwachung der Umgebung des Fahrzeugs möglich, bei der einfach und genau unterschieden werden kann, ob ein Hindernis ein Objekt ist oder ob es sich um eine punktuelle Störung handelt, wie beispielsweise Regen oder Schnee oder auch Unkraut oder Gras am Straßenrand.

Gemäß einer beispielhaften Ausführungsform des Fahrzeugs ist das Fahrzeug ein Flurförderzeug.

Gerade bei Flurförderzeugen ist der Einsatz eines solchen Assistenzsystems mit Unterscheidung zwischen relevanten Objekten im Bereich des Flurförderzeugs und punktuellen Störungen durch Umgebungseinflüsse wie Regen oder Schnee oder Hindernisse am Straßenrand wie Unkraut oder Gras vorteilhaft, damit der Fahrer die korrekten Informationen zu möglichen Hindernissen erhält, um das Flurförderzeug unfallfrei führen zu können.

Gemäß einer beispielhaften Ausführungsform des Fahrzeugs umfasst der Lidar-Sensor eine rotierbare Sender/Empfänger-Einheit oder eine feststehende Sender/Empfänger-Einheit.

Das Fahrzeug kann damit flexibel anhand von vorgegebenen Anforderungen mit dem geeigneten Lidar-Sensor ausgestattet werden.

Gemäß einem dritten Aspekt der Erfindung wird die oben beschriebene Aufgabe gelöst durch ein Verfahren zum Erkennen einer Umgebung eines Fahrzeugs, das mit dem Lidar-Sensor ausgestattet ist, wobei das Verfahren folgendes umfasst: Empfangen von Sensordaten des Lidar-Sensors, wobei die Sensordaten eine Mehrzahl von Lasermesspunkten in Azimut-Koordinaten und eine Mehrzahl von Lasermesspunkten in Elevations-Koordinaten umfassen; Detektieren eines Objekts anhand der Lasermesspunkte in Azimut-Koordinaten und in Elevations-Koordinaten; und Unterscheiden des Objekts von einer punktuellen Störung, insbesondere Umwelteinflüssen wie Regen oder Schnee und unkritischen Hindernissen am Straßenrand wie Unkraut oder Gras, anhand einer Clusterung, welche auf benachbarten Lasermesspunkten der Mehrzahl von Lasermesspunkten in Azimut-Koordinaten und/oder benachbarten Lasermesspunkten der Mehrzahl von Lasermesspunkten in Elevations-Koordinaten basiert.

Ein solches Verfahren bietet eine rechenzeiteffiziente Lösung zum Herausfiltern von unerwünschten Umwelteinflüssen, die mit einer geringen Auslastung des Arbeitsspeichers insbesondere für Embedded Systeme geeignet ist.

Weitere Vorteile und Einzelheiten der Erfindung werden anhand der in den schematischen Figuren dargestellten Ausführungsbeispiele näher erläutert. Hierbei zeigen:
- Figur 1: eine schematische Darstellung eines erfindungsgemäßen Assistenzsystems 200 für ein Fahrzeug 110 das mit einem Lidar-Sensor 120 ausgestattet ist;
- Figur 2: eine schematische Darstellung 300 zweier beispielhafter Lasermesspunkte Pₐ₋₁, Pₐ eines Lidar-Sensors auf derselben Elevation;
- Figur 3: eine schematische Darstellung 400 dreier beispielhafter Lasermesspunkte Pₑ₊₁, Pₑ, Pₑ₋₁ eines Lidar-Sensors auf demselben Azimut-Schritt;
- Figur 4: eine schematische Darstellung 500 zweier beispielhafter Lasermesspunkte Pₑ, Pₑ₊₁ eines Lidar-Sensors und Veranschaulichung des Gradienten;
- Figur 5: eine schematische Darstellung 600 von vier beispielhaften Lasermesspunkten P_{a,e+1}, P_{a,e}, P_{a,e-1}, P_{a-1,e} eines Lidar-Sensors, zwei davon auf derselben Elevation und drei davon auf demselben Azimut-Schritt;
- Figur 6: eine schematische Darstellung 700 der Sensorbereiche eines Flurförderzeugs, auf welche verschiedene Filter zur Clusterung gemäß einem Beispiel angewendet werden; und
- Figur 7: eine schematische Darstellung eines erfindungsgemäßen Verfahrens 800 zum Erkennen einer Umgebung eines Fahrzeugs 110.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

In dieser Offenbarung werden Lidar-Sensoren beschrieben. Lidar (Light Detection and Ranging), auch Ladar, ist eine dem Radar verwandte Methode zur optischen Abstands- und Geschwindigkeitsmessung sowie zur Fernmessung atmosphärischer Parameter. Lidar-Sensoren kommen vor allem in Assistenzsystemen von Fahrzeugen zum Einsatz, um die Umgebung zu erkennen. Es ist eine Form des dreidimensionalen Laserscanning. Statt der Radiowellen wie beim Radar werden Laserstrahlen verwendet. Lidar-Sensoren gibt es derzeit in zwei Bauformen: rotierend und fest. Bei rotierenden Lidar-Sensoren rotiert die Sender/Empfänger-Einheit und tastet die Umgebung ab. Bei festen Lidar-Sensoren sind die Sender/Empfänger-Einheiten feststehend.

Ein (einlagiger) Lidar-Sensor tastet seine Umgebung in einer horizontalen Lage mit A Abtastschritten ab. Es gibt auch mehrlagige Lidar-Sensoren, welche die Umgebung über E horizontale Lagen (Elevationen bzw. Ebenen) abtasten. Das Ergebnis ist eine Punktewolke (Point Cloud), bestehend aus N = A x E Punkten (Lasermessungen) pro Abtastschritt.

Innerhalb dieser Point Cloud werden mittels Clusterbildung (Anhäufung von Punkten ähnlicher Eigenschaften) schließlich Objekte (Cluster) identifiziert.

Die hier beschriebenen Sensordaten können von einer Steuerung, beispielsweise einer ECU verarbeitet werden. Eine elektronische Steuereinheit (ECU), auch elektronisches Steuermodul (ECM) genannt, ist ein eingebettetes System in der Fahrzeugelektronik, das ein oder mehrere elektrische Systeme oder Subsysteme in einem Fahrzeug, zum Beispiel einem Flurförderzeug steuert.

Ein Flurförderzeug kann ein gleisloses, gleisgebundenes oder spurgeführtes Fahrzeug sein, das für den Transport von Waren verwendet wird. Das Flurförderzeug kann, aber muss nicht mit einer Einrichtung zum Heben und Stapeln von Lasten versehen sein.

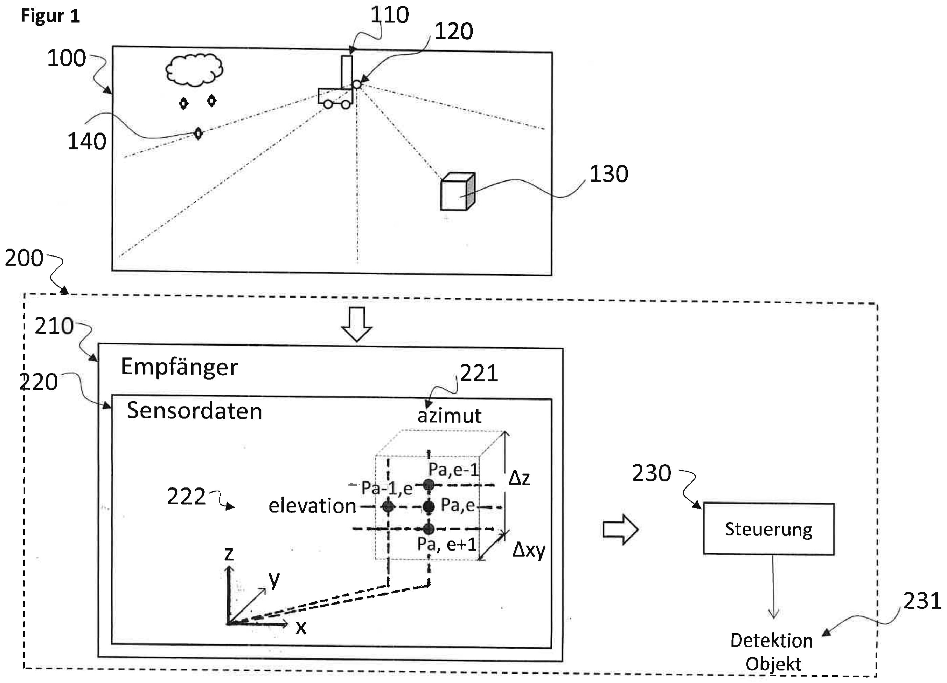

Figur 1 zeigt eine schematische Darstellung eines erfindungsgemäßen Assistenzsystems 200 für ein Fahrzeug 110, beispielsweise ein Flurförderzeug, das mit einem Lidar-Sensor 120 ausgestattet ist.

Das Assistenzsystem 200 dient zum Erkennen einer Umgebung 100 des Fahrzeugs 110. Es umfasst einen Empfänger 210 zum Empfang von Sensordaten 220 des Lidar-Sensors 120. Die Sensordaten 220 umfassen eine Mehrzahl von Lasermesspunkten in Azimut-Koordinaten 221 und eine Mehrzahl von Lasermesspunkten in Elevations-Koordinaten 222.

Das Assistenzsystem 200 umfasst eine Steuerung 230, die ausgebildet ist, anhand der Lasermesspunkte in Azimut-Koordinaten 221 und in Elevations-Koordinaten 222 ein Objekt 130 zu detektieren 231 und von einer punktuellen Störung 140, beispielsweise Umwelteinflüssen wie Regen oder Schnee und unkritischen Hindernissen am Straßenrand wie Unkraut oder Gras, anhand einer Clusterung zu unterscheiden. Die Clusterung basiert dabei auf benachbarten Lasermesspunkten P_{a-1,e}, P_{a,e} der Mehrzahl von Lasermesspunkten in Azimut-Koordinaten 221 und/oder benachbarten Lasermesspunkten P_{a,e+1}, P_{a,e}, P_{a,e-1} der Mehrzahl von Lasermesspunkten in Elevations-Koordinaten 222, wie in Figur 1 dargestellt.

Der Azimut ist in der Astronomie eine der beiden Koordinaten, mit denen ein Punkt an der Himmelskugel im horizontalen Koordinatensystem verortet werden kann. Der ergänzende Vertikalwinkel über dem Horizont ist die Elevation. Gemeinsam beschreiben die beiden Winkel eine räumliche Blickrichtung. Der Azimutwinkel bezeichnet somit die horizontale Ausrichtung des Lidar-Sensors, im Gegensatz zur Elevation, die den vertikalen Winkel zwischen Horizont und Sensorausrichtung angibt.

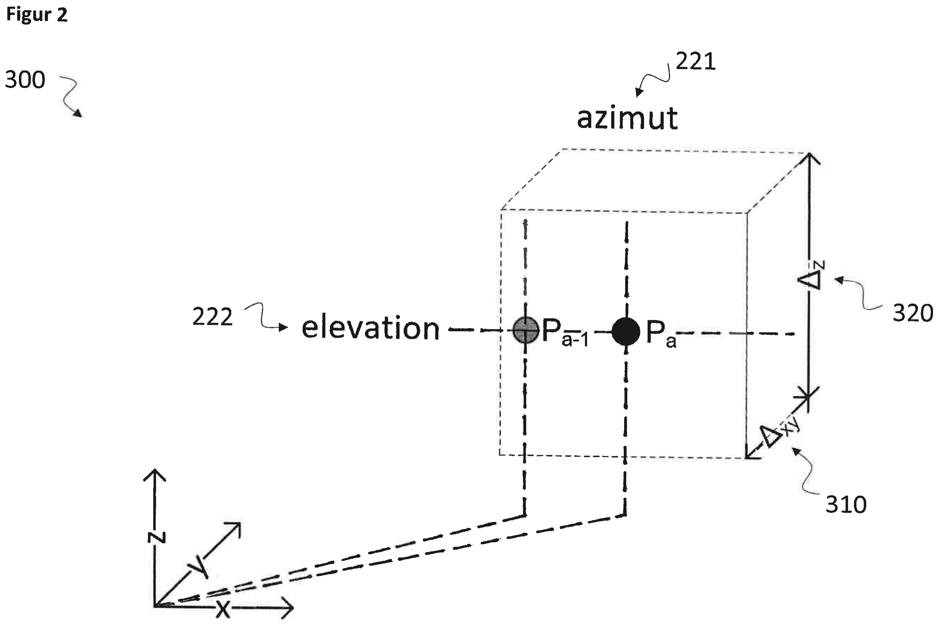

Die Steuerung 230 kann ausgebildet sein, die Lasermesspunkte in zylindrische Koordinaten umzuwandeln, welche eine Distanzkoordinate (xy) und eine Höhenkoordinate (z) aufweisen, wie unten zu Figur 2 beschrieben.

Die Steuerung 230 kann ausgebildet sein, für einen Lasermesspunkt Pₐ einen benachbarten Lasermesspunkt Pₐ₋₁ mit derselben Elevations-Koordinate 222 und einer benachbarten Azimut-Koordinate 221 zu detektieren, der innerhalb eines Toleranzbereichs zu dem Lasermesspunkt Pₐ liegt, wie unten zu Figur 2 beschrieben. Die Steuerung 230 kann dabei ausgebildet sein, bei Detektion des benachbarten Lasermesspunkts Pₐ₋₁ ein Objekt 130 zu detektieren und von einer punktuellen Störung 140 zu unterscheiden.

Der Toleranzbereich kann einen ersten Toleranzbereich 310 bezüglich Distanzkoordinaten (xy) des Lasermesspunkts Pₐ zu dem benachbarten Lasermesspunkt Pₐ₋₁ und einen zweiten Toleranzbereich 320 bezüglich Höhenkoordinaten (z) des Lasermesspunkts Pₐ zu dem benachbarten Lasermesspunkt Pₐ₋₁ umfassen, wie unten zu Figur 2 beschrieben.

Die Steuerung 230 kann ausgebildet sein, bei einer Abweichung der Distanzkoordinate (xyₐ) des Lasermesspunkts Pₐ von der Distanzkoordinate (xyₐ₋₁) des benachbarten Lasermesspunkts Pₐ₋₁, welche kleiner ist als der erste Toleranzbereich 310 und bei einer Abweichung der Höhenkoordinate (zₐ) des Lasermesspunkts Pₐ von der Höhenkoordinate (zₐ₋₁) des benachbarten Lasermesspunkts Pₐ₋₁, welche kleiner ist als der zweite Toleranzbereich 320, ein Objekt 130 zu detektieren, wie unten zu Figur 2 beschrieben.

Der erste Toleranzbereich 310 und/oder der zweite Toleranzbereich 320 können von einer Streuung und einem Konfidenzintervall der Lasermesspunkte 221, 222 abhängig sein, wie unten zu Figur 2 beschrieben. Insbesondere können sie von einer multiplikativen Verknüpfung der Streuung mit dem Konfidenzintervall abhängig sein, wie unten zu Figur 2 beschrieben.

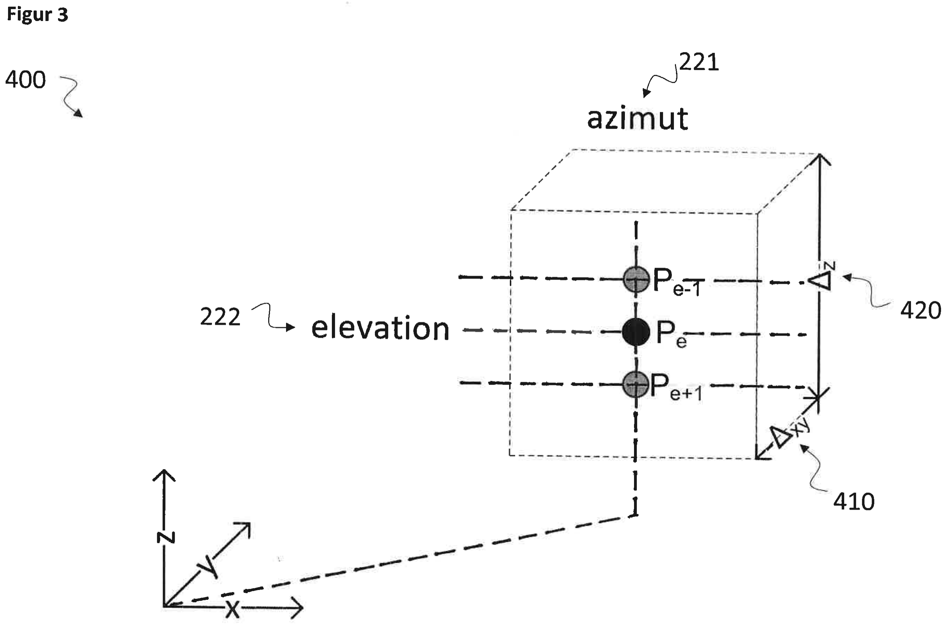

Die Steuerung 230 kann ausgebildet sein, einen Gradienten des Lasermesspunkts Pₐ zu dem benachbarten Lasermesspunkt Pₐ₋₁ und einen Gradienten des benachbarten Lasermesspunkts Pₐ₋₁ zu einem diesem benachbarten Lasermesspunkt Pₐ₋₂ zu bestimmen, wie unten zu Figur 3 beschrieben. Die Steuerung 230 kann ausgebildet sein, bei gleichem Vorzeichen der zwei Gradienten ein Objekt 130 zu detektieren und von einer punktuellen Störung 140 zu unterscheiden, wie unten zu Figur 3 beschrieben.

Die Steuerung 230 kann ausgebildet sein, für einen Lasermesspunkt Pₑ mindestens einen benachbarten Lasermesspunkt Pₑ₋₁, Pₑ₊₁ mit derselben Azimut-Koordinate 221 und einer benachbarten Elevations-Koordinate 222 zu detektieren, der innerhalb eines Toleranzbereichs zu dem Lasermesspunkt Pₑ liegt, wie unten zu Figur 3 beschrieben. Die Steuerung 230 kann ausgebildet sein, bei Detektion des mindestens einen benachbarten Lasermesspunkts Pₑ₋₁, Pₑ₊₁ ein Objekt 130 zu detektieren und von einer punktuellen Störung 140 zu unterscheiden, wie unten zu Figur 3 beschrieben.

Der Toleranzbereich kann einen ersten Toleranzbereich 410 bezüglich Distanzkoordinaten (xy) des Lasermesspunkts Pₑ zu dem mindestens einen benachbarten Lasermesspunkt Pₑ₋₁, Pₑ₊₁ und einen zweiten Toleranzbereich 420 bezüglich Höhenkoordinaten (z) des Lasermesspunkts Pₑ zu dem mindestens einen benachbarten Lasermesspunkt Pₑ₋₁, Pₑ₊₁ umfassen, wie unten zu Figur 3 beschrieben.

Die Steuerung 230 kann ausgebildet sein, bei einer Abweichung der Distanzkoordinate (xyₑ) des Lasermesspunkts Pₑ von der Distanzkoordinate (xyₑ₋₁, xyₑ₊₁) des mindestens einen benachbarten Lasermesspunkts Pₑ₋₁, Pₑ₊₁, welche kleiner ist als der erste Toleranzbereich 410 und bei einer Abweichung der Höhenkoordinate (zₑ) des Lasermesspunkts Pₑ von der Höhenkoordinate zₑ₋₁, zₑ₊₁ des mindestens einen benachbarten Lasermesspunkts Pₑ₋₁, Pₑ₊₁, welche kleiner ist als der zweite Toleranzbereich 420, ein Objekt 130 zu detektieren, wie unten zu Figur 3 beschrieben.

Der erste Toleranzbereich 410 und/oder der zweite Toleranzbereich 420 können von einer Streuung und einem Konfidenzintervall der Lasermesspunkte 221, 222 abhängig sein, insbesondere einer multiplikativen Verknüpfung der Streuung mit dem Konfidenzintervall, wie unten zu Figur 3 beschrieben.

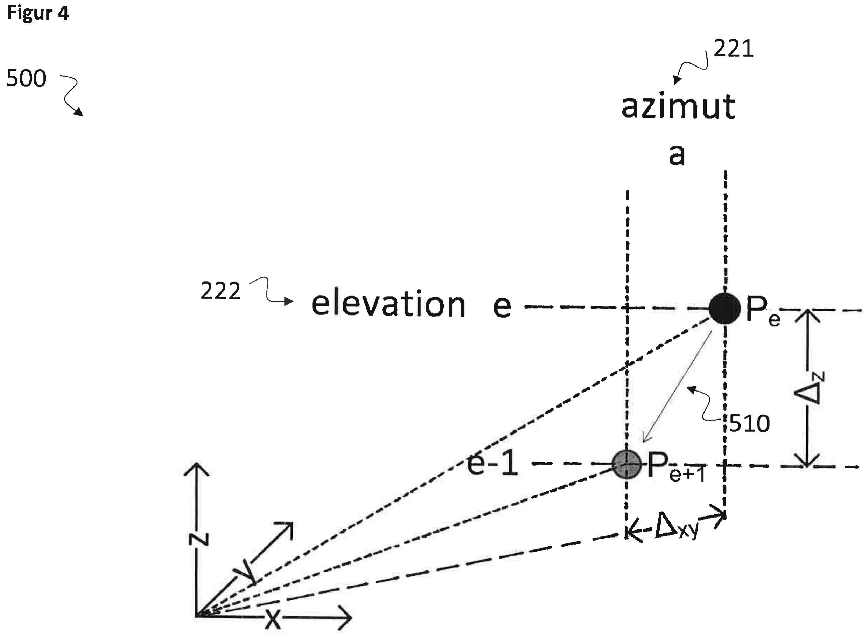

Die Steuerung 230 kann ausgebildet sein, einen Gradienten 510 des Lasermesspunkts Pₑ zu dem mindestens einen benachbarten Lasermesspunkt Pₑ₋₁, Pₑ₊₁ und einen Gradienten des mindestens einen benachbarten Lasermesspunkts Pₑ₋₁, Pₑ₊₁ zu einem diesem benachbarten Lasermesspunkt Pₑ₋₂ zu bestimmen, wie unten zu Figur 4 beschrieben. Die Steuerung 230 kann ausgebildet sein, bei gleichem Vorzeichen der zwei Gradienten ein Objekt 130 zu detektieren und von einer punktuellen Störung 140 zu unterscheiden, wie unten zu Figur 4 beschrieben.

Das Assistenzsystem 200 kann neben der Steuerung 200 auch den Lidar-Sensor 120 umfassen. Das Assistenzsystem 200 kann in einem Fahrzeug eingesetzt werden, wie im Folgenden dargestellt.

Ein solches Fahrzeug 110 umfasst: einen Lidar-Sensor 120, der ausgebildet ist, eine Umgebung 100 des Fahrzeugs 110 zu erfassen; und ein Assistenzsystem 200 wie oben beschrieben, das ausgebildet ist, ein Objekt 130 zu detektieren 231 und von einer punktuellen Störung 140, insbesondere Umwelteinflüssen wie Regen oder Schnee und unkritischen Hindernissen am Straßenrand wie Unkraut oder Gras, zu unterscheiden.

Das Fahrzeug 110 kann beispielsweise ein Flurförderzeug sein.

Als Flurförderzeug bezeichnet man alle gleislosen, gleisgebundenen oder spurgeführten Fahrzeuge, die innerbetrieblich für den Transport von Waren verwendet werden. Mitunter sind diese mit einer Einrichtung zum Heben und Stapeln von Lasten versehen, allerdings ist diese nicht zwingend notwendig.

Der Lidar-Sensor 120 kann eine rotierbare Sender/Empfänger-Einheit oder eine feststehende Sender/Empfänger-Einheit umfassen.

Figur 2 zeigt eine schematische Darstellung 300 zweier beispielhafter Lasermesspunkte Pₐ₋₁, Pₐ eines Lidar-Sensors 120 eines Assistenzsystems 200 wie oben zu Figur 1 beschrieben auf derselben Elevation 222 und unterschiedlicher Azimut-Koordinate 221.

Unter der Annahme, dass ein für die Applikation relevantes Hindernis eine hinreichend homogene Oberfläche hat, lässt sich ein Messpunkt P über sphärische Koordinaten (Kugelkoordinaten) mit
- Distanz r
- Azimutwinkel θ → aus Azimut-Schritt a
- Polarwinkel φ → aus Elevation e
bestimmen.

Die sphärischen Koordinaten können in kartesische Koordinaten (siehe Koordinatensystem xyz in Figur 2) wie folgt umgerechnet werden:
- $x = r ⋅ cos \left(θ\right) ⋅ cos \left(φ\right)$
- $y = r ⋅ sin \left(θ\right) ⋅ cos \left(φ\right)$
- $z = r ⋅ sin \left(φ\right)$
und diese können wiederum in zylindrische Koordinaten umgerechnet werden: $Distanz xy = √ \left({x}^{2}+{y}^{2}\right)$
- Höhe z

Dies kann beispielsweise in der Steuerung 230 erfolgen.

Für den hier vorgestellten Algorithmus werden die Koordinaten von P in zylindrischen Koordinaten benötigt, was in der Steuerung 230 berechnet werden kann.

Betrachtung auf derselben Elevation (über benachbarte Azimut-Schritte):
Ein Messpunkt Pₐ bei Azimut-Schritt a und Elevation e ist dann relevant, wenn auf derselben Elevation auf dem benachbarten Azimut-Schritt a-1 ein Messpunkt Pₐ₋₁ existiert, dessen
   - $xy - Koordinate der xy - Koordinate von {P}_{a} \pm Toleranz \left(erste Toleranz 310\right)$
   - $z - Koordinate der z - Koordinate von {P}_{a} \pm Toleranz \left(zweite Toleranz 320\right)$
   entspricht.

Sollen die Koordinaten in
- xy-Richtung um maximal Δxy
- Z-Richtung um maximal Δz
abweichen, so ergibt sich für die einzelnen Komponenten xy sowie z, damit Pₙ ein relevanter Punkt ist: ${xy}_{a} - {xy}_{a - 1} ≦ Δxy$ ${z}_{a} - {z}_{a - 1} ≦ Δz$

Δxy bzw. Δz kann man dabei unter Berücksichtigung der Streuung σ der Messwerte auslegen. Je nach Konfidenzintervall k und unter der Annahme, dass sich die komplette Streuung auf eine einzelne Komponente der Koordinate auswirken kann, gilt somit:
- $Δxy = k ⋅ σ$
- $Δ z = k ⋅ σ$

Ein Konfidenzintervall, auch Vertrauensintervall, Vertrauensbereich oder Erwartungsbereich genannt, ist in der Statistik ein Intervall, das die Präzision der Lageschätzung eines Parameters angeben soll. Das Konfidenzintervall gibt den Wertebereich an, der mit einer gewissen Wahrscheinlichkeit den Parameter der Verteilung einer Zufallsvariable einschließt. Diese Wahrscheinlichkeit wird durch das Konfidenzniveau, auch Konfidenzkoeffizient genannt, festgelegt und entspricht der nominalen Überdeckungswahrscheinlichkeit. Ein häufig verwendetes Konfidenzniveau ist 95 %.

Die Streuung ist die Verteilung von einzelnen Werten um den Mittelwert. Liegen die Daten sehr dicht am Mittelwert, spricht man von einer schwachen Streuung, liegen sie weit entfernt um ihn, dann von einer starken Streuung.

Figur 3 zeigt eine schematische Darstellung 400 dreier beispielhafter Lasermesspunkte Pₑ₊₁, Pₑ, Pₑ₋₁ eines Lidar-Sensors 120 eines Assistenzsystems 200 wie oben zu Figur 1 beschrieben auf demselben Azimut-Schritt 221 über benachbarte Elevationen 222.

Ein Messpunkt Pₑ bei Azimut-Schritt a und Elevation e ist dann relevant, wenn auf demselben Azimut-Schritt auf mindestens einer benachbarten Elevation e-1 oder e+1 ein Messpunkt Pₑ₋₁ bzw. Pₑ₊₁ existiert, dessen
- $xy - Koordinate der xy - Koordinate von {P}_{e} \pm Toleranz \left(erste Toleranz 410\right)$
- $z - Koordinate der z - Koordinate von {P}_{e} \pm Toleranz \left(zweite Toleranz 420\right)$
entspricht.

Sollen die Koordinaten in
- xy-Richtung um maximal Δxy
- Z-Richtung um maximal Δz
abweichen, so ergibt sich für die einzelnen Komponenten xy sowie z, damit Pₙ ein relevanter Punkt ist: ${xy}_{e} - {xy}_{e - 1} ≦ Δxy$ ${z}_{e} - {z}_{e - 1} ≦ Δz$ beziehungsweise: ${xy}_{e} - {xy}_{e + 1} ≦ Δxy$ ${z}_{e} - {z}_{e + 1} ≦ Δz$

Dies kann beispielsweise in der Steuerung 230 bestimmt werden.

Δxy bzw. Δz kann man dabei unter Berücksichtigung der Streuung σ der Messwerte auslegen. Je nach Konfidenzintervall k und unter der Annahme, dass sich die komplette Streuung auf eine einzelne Komponente der Koordinate auswirken kann, gilt somit:
- $Δxy = k ⋅ σ$
- $Δ z = k ⋅ σ$

Dies kann beispielsweise in der Steuerung 230 berechnet werden.

Figur 4 zeigt eine schematische Darstellung 500 zweier beispielhafter Lasermesspunkte Pₑ, Pₑ₊₁ eines Lidar-Sensors 120 eines Assistenzsystems 200 wie oben zu Figur 1 beschrieben und Veranschaulichung des Gradienten 510.

Der Gradient grad 510 eines Punktes, zum Beispiel Punkt Pₑ in Figur 4, bestimmt sich zum nächsten Punkt, zum Beispiel Punkt Pₑ₊₁ in Figur 4, auf demselben Azimut-Schritt 221, d.h. zum Punkt auf der benachbarten Elevation 222 zu: $grad = {Δz}_{a} / Δ {xy}_{a} = \left({z}_{a , e}-{z}_{a , e + 1}\right) / \left({xy}_{a , e}-{xy}_{a , e + 1}\right)$

Von Interesse ist dabei insbesondere die Gradientenrichtung, die sich anhand des Vorzeichens des Gradienten, d.h. sign(grad), ergibt.

Sowohl die Bestimmungen gemäß der Figur 2 als auch gemäß der Figur 3 lassen sich dahingehend erweitern, als dass man für benachbarte Punkte zusätzlich die Anforderung stellt, dass diese dieselbe Gradientenrichtung aufweisen müssen, um die Robustheit des Algorithmus zu erhöhen.

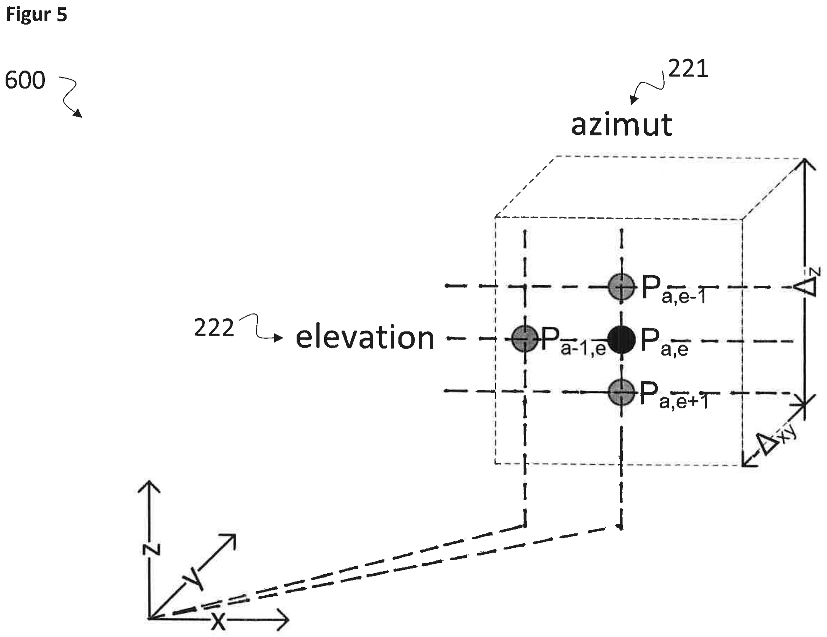

Figur 5 zeigt eine schematische Darstellung 600 von vier beispielhaften Lasermesspunkten P_{a,e+1}, P_{a,e}, P_{a,e-1}, P_{a-1,e} eines Lidar-Sensors, zwei davon auf derselben Elevation 222 und drei davon auf demselben Azimut-Schritt 221.

Um eine ausreichende Clusterung zu erreichen, kann eine der Betrachtung von benachbarten Punkten auf derselben Elevation oder eine Betrachtung auf demselben Azimut-Schritt notwendig sein.

Beide Betrachtungen können auch miteinander kombiniert werden, um die Clusterbildung zu intensivieren und die Anwendung robuster gegen Störungen zu machen.

Das heißt, ein Punkt P_{a,e} benötigt entweder gemäß der Darstellung in Figur 2 und 3 gültige benachbarte Punkte ${P}_{a , e - 1} UND {P}_{a - 1 , e}$

ODER gültige benachbarte Punkte ${P}_{a , e + 1} UND {P}_{a - 1 , e}$ um ein für die Applikation relevanter Punkt zu sein. Somit ist ein relevanter Punkt mit einem Cluster aus drei Punkten definiert.

Zusätzlich kann man an P_{a,e} und die in (I) und (II) aufgeführten Punkte die Anforderung stellen, dass deren Gradient dieselbe Richtung aufweisen muss, um die Filterwirkung der Clusterung zu verstärken.

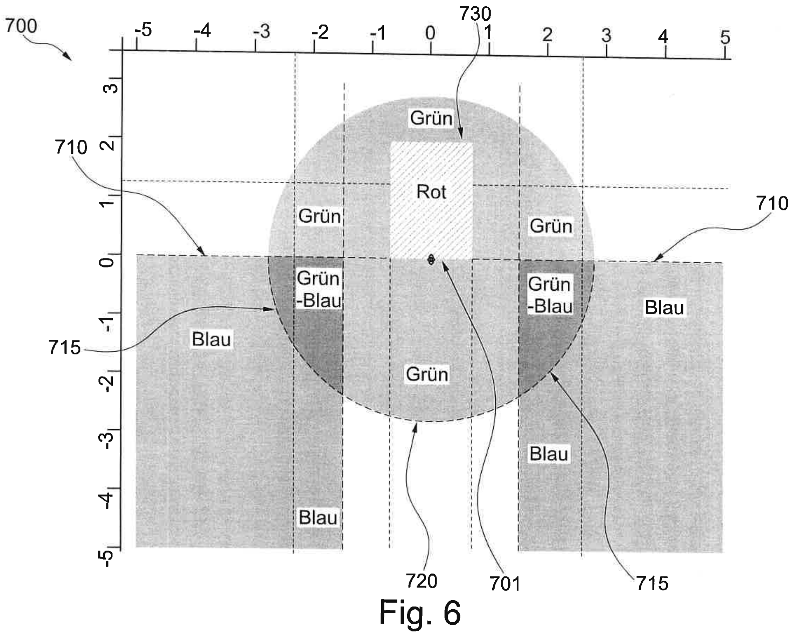

Figur 6 zeigt eine schematische Darstellung 700 der Sensorbereiche eines Flurförderzeugs 730, auf welche verschiedene Filter zur Clusterung gemäß einem Beispiel angewendet werden.

Die oben zu den Figuren 2 und 3 beschriebenen Clusterungen können auch so kombiniert werden, dass man verschiedene Bereiche des Staplers mit unterschiedlichen Filtern abdeckt, je nachdem wie stark man eine Clusterung vornehmen möchte:
- Grüner Bereich 720: Clusterung gemäß Figur 2
- Blauer Bereich 710: Clusterung gemäß Figur 3
- Grün-Blauer Bereich 715: Clusterung gemäß Figur 5 (Kombination)

In diesem Fall würde der seitliche Nahbereich des Flurförderzeugs (rot schraffiert 730 dargestellt) besonders stark geclustert, damit zum Beispiel bei einer Fahrt entlang einer Straße seitliche Hindernisse wie Unkraut oder Gräser nicht als Hindernis erkannt werden.

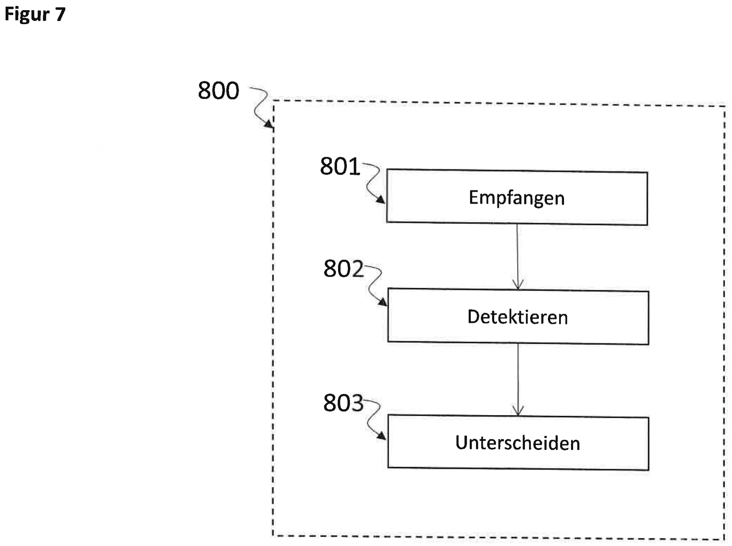

Figur 7 zeigt eine schematische Darstellung eines erfindungsgemäßen Verfahrens 800 zum Erkennen einer Umgebung 100 eines Fahrzeugs 110. Das Fahrzeug 110 ist dabei mit einem Lidar-Sensor 120 ausgestattet, wie in Figur 1 schematisch dargestellt.

Das Verfahren 800 umfasst ein Empfangen 801 von Sensordaten 220 des Lidar-Sensors 120, wie in Figur 1 dargestellt, wobei die Sensordaten 220 eine Mehrzahl von Lasermesspunkten in Azimut-Koordinaten 221 und eine Mehrzahl von Lasermesspunkten in Elevations-Koordinaten 222 umfassen.

Das Verfahren 800 umfasst ein Detektieren 802 eines Objekts 130 anhand der Lasermesspunkte in Azimut-Koordinaten 221 und in Elevations-Koordinaten 222, wie oben zu den Figuren 1 bis 6 dargestellt.

Das Verfahren 800 umfasst ein Unterscheiden 803 des Objekts 130 von einer punktuellen Störung 140, insbesondere Umwelteinflüssen wie Regen oder Schnee und unkritischen Hindernissen am Straßenrand wie Unkraut oder Gras, anhand einer Clusterung, welche auf benachbarten Lasermesspunkten P_{a-1,e}, P_{a,e} der Mehrzahl von Lasermesspunkten in Azimut-Koordinaten 221 und/oder benachbarten Lasermesspunkten P_{a,e+1}, P_{a,e}, P_{a,e-1} der Mehrzahl von Lasermesspunkten in Elevations-Koordinaten 222 basiert, wie oben zu den Figuren 1 bis 6 dargestellt.

Ferner betrifft die Erfindung ein Computerprogramm zur Ausführung dieses Verfahrens 800 auf einem Computer, zum Beispiel einer Steuerung wie einer ECU bzw. einem Steuerrechner des Fahrzeugs.

## Patentansprüche

1. Assistenzsystem (200) für ein Fahrzeug (110), das mit einem Lidar-Sensor (120) zum Erkennen einer Umgebung (100) des Fahrzeugs (110) ausgestattet ist, wobei das Assistenzsystem (200) folgendes umfasst:
einen Empfänger (210) zum Empfang von Sensordaten (220) des Lidar-Sensors (120), wobei die Sensordaten (220) eine Mehrzahl von Lasermesspunkten in Azimut-Koordinaten (221) und eine Mehrzahl von Lasermesspunkten in Elevations-Koordinaten (222) umfassen; und
eine Steuerung (230), die ausgebildet ist, anhand der Lasermesspunkte in Azimut-Koordinaten (221) und in Elevations-Koordinaten (222) ein Objekt (130) zu detektieren (231) und von einer punktuellen Störung (140), insbesondere Umwelteinflüssen wie Regen oder Schnee und unkritischen Hindernissen am Straßenrand wie Unkraut oder Gras, anhand einer Clusterung zu unterscheiden, welche auf benachbarten Lasermesspunkten (P_{a-1,e}, P_{a,e}) der Mehrzahl von Lasermesspunkten in Azimut-Koordinaten (221) und/oder benachbarten Lasermesspunkten (P_{a,e+1}, P_{a,e}, P_{a,e-1}) der Mehrzahl von Lasermesspunkten in Elevations-Koordinaten (222) basiert.

2. Assistenzsystem (200) nach Anspruch 1,
wobei die Steuerung (230) ausgebildet ist, die Lasermesspunkte in zylindrische Koordinaten umzuwandeln, welche eine Distanzkoordinate (xy) und eine Höhenkoordinate (z) aufweisen.

3. Assistenzsystem (200) nach Anspruch 1 oder 2,
wobei die Steuerung (230) ausgebildet ist, für einen Lasermesspunkt (Pₐ) einen benachbarten Lasermesspunkt (Pₐ₋₁) mit derselben Elevations-Koordinate (222) und einer benachbarten Azimut-Koordinate (221) zu detektieren, der innerhalb eines Toleranzbereichs zu dem Lasermesspunkt (Pₐ) liegt; und
wobei die Steuerung (230) ausgebildet ist, bei Detektion des benachbarten Lasermesspunkts (Pₐ₋₁) ein Objekt (130) zu detektieren und von einer punktuellen Störung (140) zu unterscheiden.

4. Assistenzsystem (200) nach Anspruch 3,
wobei der Toleranzbereich einen ersten Toleranzbereich (310) bezüglich Distanzkoordinaten (xy) des Lasermesspunkts (Pₐ) zu dem benachbarten Lasermesspunkt (Pₐ₋₁) und einen zweiten Toleranzbereich (320) bezüglich Höhenkoordinaten (z) des Lasermesspunkts (Pₐ) zu dem benachbarten Lasermesspunkt (Pₐ₋₁) umfasst.

5. Assistenzsystem (200) nach Anspruch 4,
wobei die Steuerung (230) ausgebildet ist, bei einer Abweichung der Distanzkoordinate (xyₐ) des Lasermesspunkts (Pₐ) von der Distanzkoordinate (xyₐ₋₁) des benachbarten Lasermesspunkts (Pₐ₋₁), welche kleiner ist als der erste Toleranzbereich (310) und bei einer Abweichung der Höhenkoordinate (zₐ) des Lasermesspunkts (Pₐ) von der Höhenkoordinate (zₐ₋₁) des benachbarten Lasermesspunkts (Pₐ₋₁), welche kleiner ist als der zweite Toleranzbereich (320), ein Objekt (130) zu detektieren.

6. Assistenzsystem (200) nach Anspruch 4 oder 5,
wobei der erste Toleranzbereich (310) und/oder der zweite Toleranzbereich (320) von einer Streuung und einem Konfidenzintervall der Lasermesspunkte (221, 222), insbesondere einer multiplikativen Verknüpfung der Streuung mit dem Konfidenzintervall, abhängig ist.

7. Assistenzsystem (200) nach einem der Ansprüche 3 bis 6,
wobei die Steuerung (230) ausgebildet ist, einen Gradienten des Lasermesspunkts (Pₐ) zu dem benachbarten Lasermesspunkt (Pₐ₋₁) und einen Gradienten des benachbarten Lasermesspunkts (Pₐ₋₁) zu einem diesem benachbarten Lasermesspunkt (Pₐ₋₂) zu bestimmen; und
wobei die Steuerung (230) ausgebildet ist, bei gleichem Vorzeichen der zwei Gradienten ein Objekt (130) zu detektieren und von einer punktuellen Störung (140) zu unterscheiden.

8. Assistenzsystem (200) nach einem der vorstehenden Ansprüche,
wobei die Steuerung (230) ausgebildet ist, für einen Lasermesspunkt (Pₑ) mindestens einen benachbarten Lasermesspunkt (Pₑ₋₁, Pₑ₊₁) mit derselben Azimut-Koordinate (221) und einer benachbarten Elevations-Koordinate (222) zu detektieren, der innerhalb eines Toleranzbereichs zu dem Lasermesspunkt (Pₐ) liegt; und
wobei die Steuerung (230) ausgebildet ist, bei Detektion des mindestens einen benachbarten Lasermesspunkts (Pₑ₋₁, Pₑ₊₁) ein Objekt (130) zu detektieren und von einer punktuellen Störung (140) zu unterscheiden.

9. Assistenzsystem (200) nach Anspruch 8,
wobei der Toleranzbereich einen ersten Toleranzbereich (410) bezüglich Distanzkoordinaten (xy) des Lasermesspunkts (Pₑ) zu dem mindestens einen benachbarten Lasermesspunkt (Pₑ₋₁, Pₑ₊₁) und einen zweiten Toleranzbereich (420) bezüglich Höhenkoordinaten (z) des Lasermesspunkts (Pₑ) zu dem mindestens einen benachbarten Lasermesspunkt (Pₑ₋₁, Pₑ₊₁) umfasst.

10. Assistenzsystem (200) nach Anspruch 9,
wobei die Steuerung (230) ausgebildet ist, bei einer Abweichung der Distanzkoordinate (xyₑ) des Lasermesspunkts (Pₑ) von der Distanzkoordinate (xyₑ₋₁, xyₑ₊₁) des mindestens einen benachbarten Lasermesspunkts (Pₑ₋₁, Pₑ₊₁), welche kleiner ist als der erste Toleranzbereich (410) und bei einer Abweichung der Höhenkoordinate (zₑ) des Lasermesspunkts (Pₑ) von der Höhenkoordinate (zₑ₋₁, zₑ₊₁) des mindestens einen benachbarten Lasermesspunkts (Pₑ₋₁, Pₑ₊₁), welche kleiner ist als der zweite Toleranzbereich (420), ein Objekt (130) zu detektieren.

11. Assistenzsystem (200) nach Anspruch 9 oder 10,
wobei der erste Toleranzbereich (410) und/oder der zweite Toleranzbereich (420) von einer Streuung und einem Konfidenzintervall der Lasermesspunkte (221, 222), insbesondere einer multiplikativen Verknüpfung der Streuung mit dem Konfidenzintervall, abhängig ist.

12. Assistenzsystem (200) nach einem der Ansprüche 8 bis 11,
wobei die Steuerung (230) ausgebildet ist, einen Gradienten (510) des Lasermesspunkts (Pₑ) zu dem mindestens einen benachbarten Lasermesspunkt (Pₑ₋₁, Pₑ₊₁) und einen Gradienten des mindestens einen benachbarten Lasermesspunkts (Pₑ₋₁, Pₑ₊₁) zu einem diesem benachbarten Lasermesspunkt (Pₑ₋₂) zu bestimmen; und
wobei die Steuerung (230) ausgebildet ist, bei gleichem Vorzeichen der zwei Gradienten ein Objekt (130) zu detektieren und von einer punktuellen Störung (140) zu unterscheiden.

13. Fahrzeug (110), umfassend:
einen Lidar-Sensor (120), der ausgebildet ist, eine Umgebung (100) des Fahrzeugs (110) zu erfassen; und
ein Assistenzsystem (200) nach einem der vorstehenden Ansprüche, das ausgebildet ist, ein Objekt (130) zu detektieren und von einer punktuellen Störung (140), insbesondere Umwelteinflüssen wie Regen oder Schnee und unkritischen Hindernissen am Straßenrand wie Unkraut oder Gras, zu unterscheiden.

14. Fahrzeug (110) nach Anspruch 13,
welches ein Flurförderzeug ist.

15. Fahrzeug (110) nach Anspruch 13 oder 14,
wobei der Lidar-Sensor (120) eine rotierbare Sender/Empfänger-Einheit oder eine feststehende Sender/Empfänger-Einheit umfasst.

16. Verfahren (800) zum Erkennen einer Umgebung (100) eines Fahrzeugs (110), das mit dem Lidar-Sensor (120) ausgestattet ist, wobei das Verfahren (400) folgendes umfasst:
Empfangen (801) von Sensordaten (220) des Lidar-Sensors (120), wobei die Sensordaten (220) eine Mehrzahl von Lasermesspunkten in Azimut-Koordinaten (221) und eine Mehrzahl von Lasermesspunkten in Elevations-Koordinaten (222) umfassen;
Detektieren (802) eines Objekts (130) anhand der Lasermesspunkte in Azimut-Koordinaten (221) und in Elevations-Koordinaten (222); und
Unterscheiden (803) des Objekts (130) von einer punktuellen Störung (140), insbesondere Umwelteinflüssen wie Regen oder Schnee und unkritischen Hindernissen am Straßenrand wie Unkraut oder Gras, anhand einer Clusterung, welche auf benachbarten Lasermesspunkten (P_{a-1,e}, P_{a,e}) der Mehrzahl von Lasermesspunkten in Azimut-Koordinaten (221) und/oder benachbarten Lasermesspunkten (P_{a,e+1}, P_{a,e}, P_{a,e-1}) der Mehrzahl von Lasermesspunkten in Elevations-Koordinaten (222) basiert.
